# EUROPEAN PATENT SPECIFICATION

(11) **EP 1 803 949 B1**
(45) Date of publication and mention of the grant of the patent: **25.12.2013**
(21) Application number: 05782260.3
(22) Date of filing: 07.09.2005
(51) Int. Cl.: F16C 29/04, F16C 33/38, F16C 33/66, F16C 43/06, F16C 33/40

(54) **LINEAR GUIDE DEVICE**
LINEARE FÜHRUNGSVORRICHTUNG
DISPOSITIF DE GUIDAGE LINÉAIRE

(30) Priority: 08.09.2004 JP 2004260485; 08.09.2004 JP 2004260488
(43) Date of publication of application: 04.07.2007
(73) Proprietor: THK CO., LTD., Shinagawa-ku, Tokyo 141-8503 (JP)
(72) Inventor: MICHIOKA, Hidekazu, c/o THK CO., LTD., Tokyo 141-8503 (JP); IIDA, Katsuya, c/o THK CO., LTD., Tokyo 141-8503 (JP); FUJII, Hideki, c/o THK CO., LTD., Tokyo 141-8503 (JP)
(74) Representative: Grünecker, Kinkeldey, Stockmair & Schwanhäusser
(86) International application number: PCT/JP2005/016437
(87) International publication number: WO 2006/028143

(56) References cited:
- DE-A1- 4 208 738
- JP-A- 5 231 431
- JP-A- 7 317 760
- JP-U- 59 015 825
- JP-U- 60 130 746
- JP-U- 61 054 520
- JP-U- 63 132 123
- US-A- 5 716 140

## Description

### Technical Field

The present invention relates to a linear guide device in which an inner block and an outer block are assembled together through an intermediation of a large number of balls, and which can cause, for example, a movable member such as a table fixed to the outer block to reciprocate freely along the inner block. In particular, the present invention relates to a linear guide device of a type in which there is provided between the inner block and the outer block a ball cage in which balls are arranged, with the ball cage reciprocating with the movement of the outer block or the inner block, and the further features of claim 1 or claim 2 alternatively.

### Background Art

Conventionally, as an example of a linear guide device for supporting linear movement of a movable member such as a table, in various industrial machines, a finite stroke type one using a ball cage has been known as a device for light load uses. The finite stroke type linear guide device is composed of a raceway rail which is formed, for example, in a channel-like configuration and which is fixed to the base portion of a machine, a movable block loosely fit-engaged with a guide groove provided in the raceway rail, a plurality of balls adapted to roll while bearing a load between the raceway rail and the movable block, and a thin-plate-like ball cage provided between the raceway rail and the movable block.

A plurality of holding holes for rotatably holding the individual balls are provided in the ball cage in a predetermined arrangement, with each holding hole extending between the inner peripheral surface and the outer peripheral surface of the ball cage. As a result, the ball held by each holding hole can be brought into contact with ball rolling grooves of the raceway rail and the movable block. The axial length of the ball cage is smaller than the axial length of a nut member; when the movable block is moved relative to the raceway rail, the ball cage moves axially through the gap between the movable block and the raceway rail as the balls roll. Further, a stopper member is provided at each of the front and rear end surfaces in the moving direction of the movable block, thus preventing the ball cage having moved with the rolling of the balls from being detached from the movable block. Usually, in the state in which the balls are perfectly rolling in the ball rolling grooves of the raceway rail and the movable block, the stroke of the movable block with respect to the raceway rail is double the rolling distance of the balls with respect to the raceway rail. Thus, in a linear guide device using such a ball cage, a distance which is double the stroke of the ball cage with respect to the movable block is the stroke distance of the movable block with respect to the raceway rail; when the ball cage abuts a stopper member, the stroke of the movable block with respect to the raceway rail is restricted.

Conventionally, as an example of the above-mentioned ball cage, there has been known one in which the ball holding holes are formed through stamping of a thin metal plate (JP 02-298445 A, JP 05-18414 A, etc.). In this metal ball cage, projections for holding the balls are formed in the periphery of the holding holes formed through stamping; after the balls are accommodated in the holding holes, the projections are swaged, thereby enclosing the balls in the holding holes.
Patent Document 1: JP 02-298445 A
Patent Document 2: JP 05-18414 A
Patent Document 3: JP 05-231431 A
Further prior art is disclosed with JP 59-15825 U, showing a linear guide device according to the preamble of claims 1 and 2.

### Disclosure of the Invention

### Problems to be solved by the Invention

Such a metal ball cage, however, is rather difficult to form in a complicated configuration in conformity with the gap between the movable block and the raceway rail; if, for example, the number of ball rows to be arranged in the ball cage is one, the machining thereof is relatively easy to perform; however, an attempt to hold two rows of balls arranged between the movable block and the raceway rail by means of a single ball cage results in a complicated ball cage configuration, making the machining thereof rather difficult to perform. Further, since the thickness of the thin metal plate is smaller as compared with the diameter of the balls, it is rather difficult to retain a lubricant such as grease around the balls, and there is a fear of the contact between the balls and the ball rolling surfaces not being sufficiently lubricated. Further, if the operation of swaging the projections to enclose the balls in the ball holding holes is of low precision, the projections will be constantly held in contact with the balls, thereby hindering rotation of the balls. Thus, the operation of enclosing the balls in the ball holding holes takes time and effort.

JP 05-231431 A discloses a ball cage formed of a synthetic resin. This ball cage is formed through injection molding of a synthetic resin; the injection molding is performed with the balls inserted in the mold as cores, thereby producing a ball cage enclosing balls directly. In this ball cage, it is possible to omit the time-and-effort consuming operation of enclosing the balls while arranging them in a retainer, which proves this ball cage quite superior in terms of labor saving for its production.

However, when a ball cage is thus produced through injection molding with balls utilized as cores, it is rather difficult to impart a smooth rotation to the balls since the holding holes accommodating the balls are substantially of the same diameter as the balls, and the holding holes are lightly constraining the balls. In view of this, JP 09-12464 A discloses a ball cage which is immersed in oil after the injection molding to cause the synthetic resin to swell, thereby forming gaps between the balls and the holding holes; however, it takes several hours for the gaps to be formed through swelling of the synthetic resin; further, it is necessary to control the ball cage immersion time in order to prevent formation of excessive gaps, which means the production of this ball cage takes time and effort.

JP 11-247856 A proposes a ball cage producing method in which the above-mentioned problems in ball cages formed through injection molding are taken into consideration. That is, ball patterns having a diameter larger than the diameter of the balls are arranged in the mold for forming the ball cage through injection molding, at predetermined intervals and in a protruding fashion; after the molding of the ball cage in which the ball patterns are arranged, the ball patterns are forcibly separated from the ball cage; and finally, the balls are forced into ball holding holes formed by the ball patterns, enabling the balls to be rotatably retained by the ball holding holes.

In this ball cage, which is formed by forcibly separating the ball patterns from a connection body belt formed through injection molding and thereafter forcing the balls into the ball holding holes formed by the ball patterns, it is necessary for the synthetic resin forming the ball cage to be relatively soft. However, as stated above, in the case of a finite stroke type linear guide device, the ball cage abuts a stopper member to thereby restrict the stoke amount of the movable block with respect to the raceway rail, so, if a soft material is used for the ball cage, the ball cage will suffer distortion when it abuts the stopper; thus, there is a fear of the ball cage coming into contact with the raceway rail and the movable block. Thus, in the case of a finite stroke type linear guide device, it is impossible to form the ball cage by using the method as disclosed in JP 11-247856 A.

### Means for solving the Problems

The present invention has been made in view of the above-mentioned problems in the prior art. It is a first object of the present invention to provide a linear guide device which allows the configuration of the ball cage to be easily shaped in correspondence with the configurations of the raceway rail and the movable block, which enables the ball cage to simultaneously hold balls arranged in two rows between the raceway rail and the movable block, and which is superior in lubrication property for the individual balls arranged in the ball cage, making it possible for the movable block to move smoothly with respect to the raceway rail through smooth rotation of the balls.

It is a second object of the present invention to provide a finite stroke type linear guide device which allows the configuration of the ball cage to be easily shaped in correspondence with the configurations of the raceway rail and the movable block, in which a large number of balls are enclosed in the ball cage so as not to be capable of detachment, and which allows the ball cage to be produced easily.

A linear guide device according to the present invention includes according to claim 1 or 2 amongst others: an inner block formed in a substantially rectangular sectional configuration and having on each of both sides of the inner block one set of two lines of upper and lower vertically adjacent ball rolling grooves; an outer block formed in a channel-like configuration to have an accommodating groove to be loosely fit-engaged with the inner block and having, on inner side surfaces of the outer block facing the accommodating groove ball, rolling grooves opposed to the ball rolling grooves of the inner block; a large number of balls rolling in load ball paths formed by the ball rolling grooves of the inner block and the outer block while bearing a load; and a pair of ball cages arranged in gaps between outer side surfaces of the inner block and inner side surfaces of the outer block and aligning the large number of balls rolling in the pairs of ball rolling grooves at predetermined intervals. In this case, one of the inner block and the outer block is fixed to a stationary portion such as the bed and column of a machine to constitute the raceway rail, and the other carries a movable member such as a table, to serve as the movable block.

The ball cage for achieving the first object is formed of a synthetic resin as a thin plate endowed with no flexibility, and a large number of balls are arranged in two rows in the ball cage. Since the ball cage is thus formed of a synthetic resin, a complicated configuration in conformity with the gap between the inner block and the outer block can be formed easily by molding such as injection molding. Further, by forming the ball cage as a thin plate endowed with no flexibility, it is possible to maintain the ball cage straight in the gap between the inner block and the outer block, making it possible to prevent the ball cage from coming into contact with the inner block or the outer block in motion.

Further, two lines of substantially semicircular raised holding sections are formed on each of the front and back sides of the ball cage in correspondence with the load ball paths, and holding holes for rotatably accommodating the individual balls are penetratingly formed at predetermined intervals so as to segment theraisedholdingsections. This makes it possible for the spherical surfaces of the balls accommodated in the holding holes to be enwrapped in a wider area by the raised holding sections, making it possible to maintain a lubricant such as grease, in a satisfactory fashion in the gaps between the balls and the holding holes. As a result, the rotation of the balls relative to the ball cage is smoothened, and a break in the oil film between the balls and the ball rolling grooves is prevented, making it possible to protect the balls and the ball rolling grooves for a long period of time.

Further, one opening of each holding hole provided in the ball cage is of a smaller size than the ball diameter, and the other opening thereof is of a larger size than the ball diameter, thereby making it possible for the balls accommodated in the holding holes to be freely replaced. Thus, by drawing out the ball cage from between the inner block and the outer block, it is possible to freely replace the balls accommodated in the holding holes of the ball cage, and by changing the diameter of the balls accommodated, it is possible to easily adjust the preload imparted to the balls between the inner block and the outer block.

On the other hand, the ball cage for achieving the second object is formed by bonding together a first cage plate and a second cage plate formed of a synthetic resin into a thin plate endowed with no flexibility. Since the ball cage is thus formed of a synthetic resin, it can be easily formed in a complicated configuration in conformity with the gap between the inner block and the outer block by molding such as injection molding. Further, by forming the ball cage as a thin plate endowed with no flexibility, it is possible to maintain the ball cage straight in the gap between the inner block and the outer block, making it possible to prevent the ball cage from coming into contact with the inner block or the outer block in motion.

Further, in each of the first cage plate and the second cage plate, there are formed divisional holes allowing insertion of the individual balls from the bonding surface side and their retention therein; by bonding together the first cage plate and the second cage plate, the divisional holes corresponding to each other overlap each other, thereby forming holding holes enclosing the balls so as to prohibit detachment thereof. That is, in this ball cage, it is possible to enclose the balls in the ball holding holes so as to prohibit their detachment solely by forming the first cage plate and the second cage plate by injection molding or the like of synthetic resin and then bonding them together to form the ball holding holes, thus making it possible to produce a ball cage far more easily and at lower cost as compared with the case of the conventional ball cages.

### Brief Description of the Drawings

[Fig. 1] A plan view (portion (a)) and a partially cutaway side view (portion (b)) of a linear guide device according to a first embodiment of the present invention.
[Fig. 2] A sectional view, taken along the line II-II, of the linear guide device shown in Fig. 1.
[Fig. 3] A view, taken in the direction of an arrow III, of linear guide device shown in Fig. 1.
[Fig. 4] A perspective view of a ball cage of the linear guide device shown in Fig. 1.
[Fig. 5] A plan view (portion (a)) and a sectional view taken along the line b-b (portion (b)), showing in detail the ball cage shown in Fig. 4.
[Fig. 6] A plan view (portion (a)) and a partially cutaway side view (portion (b)) of an exemplary linear guide device.
[Fig. 7] A front sectional view of the linear guide device shown in Fig. 6.
[Fig. 8] A perspective view of a ball cage of the linear guide device shown in Fig. 6.
[Fig. 9] A plan view (portion (a)) and a side view (portion (b)) of a ball cage of the linear guide device shown in Fig. 6.
[Fig. 10] A sectional view, taken along the line X-X, of the ball cage shown in Fig. 9.
[Fig. 11] A sectional view of a first cage plate and a second cage plate as separated from each other.
[Fig. 12] A view taken in the direction of an arrow XII of Fig. 9.

### Description of Reference Numerals

1 ... raceway rail (inner block), 2 ... movable block (outer block), 3 ... ball, 4 ... ball cage, 5,6 ... stopper plates, 40 ... holding member, 41 ... central ridge, 42 ... ball holding hole

### Best Mode for carrying out the Invention

In the following, linear guide devices according to the present invention will be described in detail with reference to the accompanying drawings.

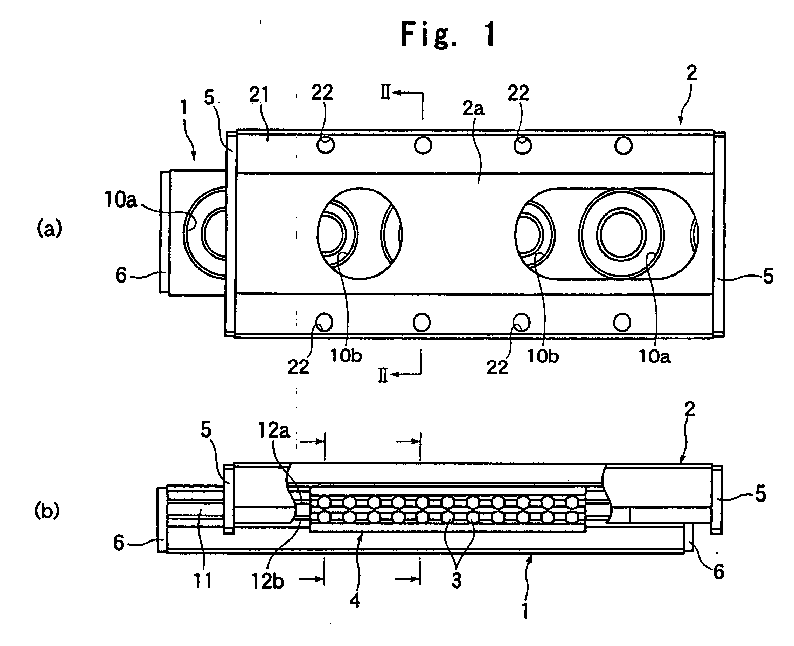

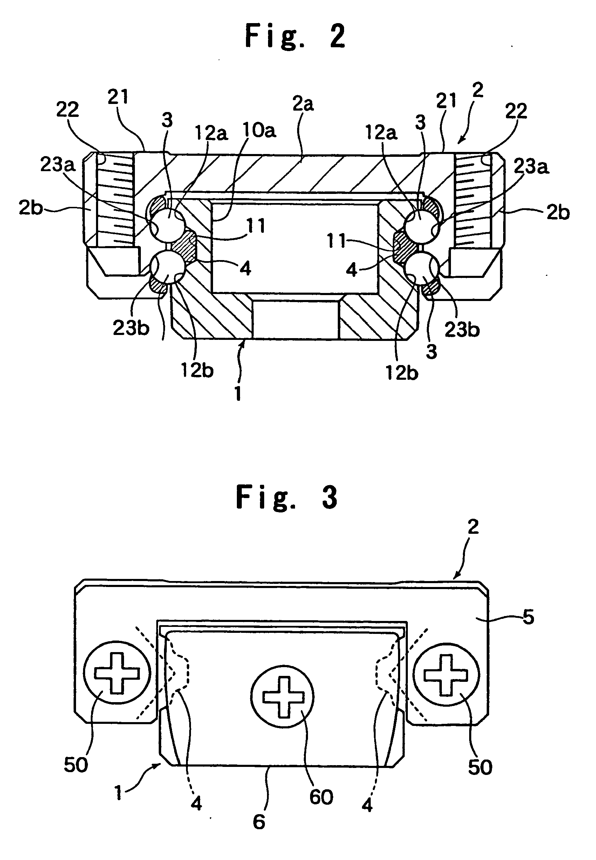

Figs. 1 and 2 show a linear guide device according to the first embodiment of the present invention. Portion (a) of Fig. 1 is a plan view, portion (b) of Fig. 1 is a side view, and Fig. 2 is a front sectional view taken along the line II-II of Fig. 1(a). This linear guide device is composed of a raceway rail 1 serving as an inner block formed in a substantially rectangular sectional configuration, a movable block 2 serving as an outer block formed in a channel-like sectional configuration and assembled to the raceway rail 1 through the intermediation of a large number of balls 3, and ball cages 4 aligning the balls 3 between the raceway rail 1 and the movable block 2.

The raceway rail 1 has bolt holes 10 extending vertically therethrough; by fastening fixation bolts (not shown) passed through the bolt holes 10 to a stationary portion of a machine, it is possible to fix the raceway rail 1 to the machine. As the bolt holes 10, there alternately provided two kinds of bolt holes 10a and 10b of different diameters, making it possible to fix the raceway rail 1 in position by using arbitrary ones of the bolt holes 10, 10b.

In both side surfaces of the raceway rail 1, there are respectively formed cage accommodating holes 11 so as to extend in the axial direction of the raceway rail 1, with part of the above-mentioned ball cages 4 being loosely fit-engaged with the cage accommodating grooves 11. At the opening edge of each of the cage accommodating grooves 11, there are formed two ball rolling grooves 12a and 12b respectively situated on the upper and lower side of the cage accommodating groove 11. Of the two ball rolling grooves 12a and 12b, the ball rolling groove 12a situated on the upper side is formed downwards at an angle of 45° with respect to the width direction of the raceway rail 1 (horizontal direction in plane of drawing), and the ball rolling groove 12b situated on the lower side is formed upwards at an angle of 45° with respect to the width direction of the raceway rail 1 (horizontal direction in plane of drawing).

On the other hand, the movable block 2 has a connection web 2a corresponding to the upper surface of the raceway rail 1, and a pair of skirt portions 2b and 2b opposed to the side surfaces of the raceway rail 1 and extending vertically downwards from the connection web 2a; the connection web 2a and the skirt portions 2b and 2b form a channel-like configuration, and define an accommodation groove 20 accommodating the upper half of the raceway rail 1. Formed on the upper surface of the connection web 2a are mounting surfaces 21 for a movable member such as a table, situated on top of the skirt portions 2b; tap holes 22 for fastening the movable member are formed by machining in the mounting surfaces 21.

In the inner side surfaces of the skirt portions 2b opposed to the side surfaces of the raceway rail 1, there are formed ball rolling grooves 23a and 23b opposed to the ball rolling grooves 12a and 12b of the raceway rail 1; the ball rolling grooves 12a and 12b on the raceway rail 1 side and the ball rolling grooves 23a and 23b on the movable block 2 side are thus opposed to each other, thereby forming load ball paths through which the balls 3 roll. That is, the balls 3 are in contact with both the ball rolling grooves 12a and 12b of the raceway rail 1 and the ball rolling grooves 23a and 23b of the movable block 2, and roll while bearing a load applied to the movable block 2. As a result, the movable block can lightly move along the raceway rail while bearing loads in all directions exerted in a plane perpendicular to the axial direction of the raceway rail.

Between the side surfaces of the raceway rail 1 and the inner surfaces of the skirt portions 2b of the movable block 2, there are provided the thin-plate-like ball cages 4, and the balls 3 rolling between the raceway rail 1 and the movable block 2 are arranged in the ball cages 4. Thus, when the balls 3 roll on the ball rolling surfaces 12a and 12b of the raceway rail 1 and the ball rolling surfaces 23a and 23b of the movable block 2, they move together with the balls 3 relative to the raceway rail 1 and the movable block 2. The ball cages 4 are formed to be shorter than the entire length of the movable block 2, that is, shorter than the ball rolling surfaces 23a and 23b. A pair of stopper plates 5 are fixed to both end surfaces in the longitudinal direction (axial direction) of the movable block 2 by means of binding screws 50, and the ball cages 4, which move together with the balls 3, abut the stopper plates 5 to be thereby locked in their movement. That is, the stopper plates 5 restrict the stroke range for the ball cages 4. The movable block 2 moves relative to the raceway rail 1 at a speed which is double the rolling speed of the balls 3 with respect to the raceway rail 1, so the movable block 2 can move relative to the raceway rail 1 by double the stroke of the ball cages 4, which is restricted by the stopper plate 5.

Even in a state in which the ball cages 4 are locked by the stopper plates 5 but in which no sufficient preload is imparted to the balls 3, slippage occurs between the balls 3 and the ball rolling surfaces 12a and 12b of the raceway rail 1 and between the balls 3 and the ball rolling surfaces 23a and 23b of the movable block 2, and there is a fear of the ball cages 4 being detached from the raceway rail 1 together with the movable block 2. In view of this, as shown in Fig. 3, other stopper plates 6 are also fixed to both ends of the raceway rail 1 by means of binding screws 60. The stopper plates 6 protrude into the cage accommodating grooves 11, so the ball cages 4 moving within the cage accommodating grooves 11 abut stopper plates 6 upon reaching the ends of the raceway rail 1, whereby the stroke range for the ball cages 4 with respect to the raceway rail 1 is restricted.

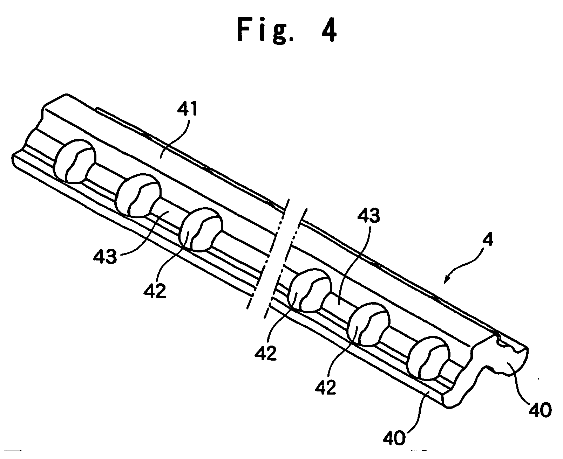

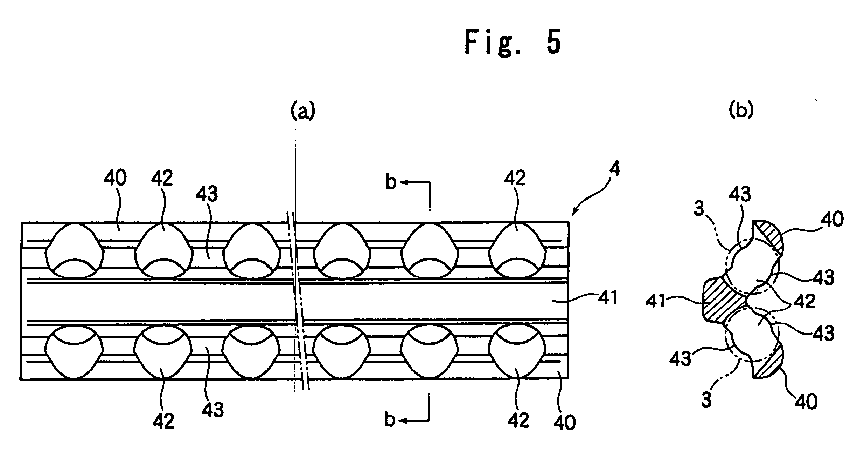

Figs. 4 and 5 show one of the ball cages 4. The ball cage 4 is formed by injection molding of a synthetic resin, and is formed so as to simultaneously hold two rows of balls 3 rolling in the two ball rolling grooves 12a and 12b formed in one side surface of the raceway rail 1. The ball cage 4 is formed in a substantially L-shaped sectional configuration by connecting by a central ridge 41 two thin-plate-like holding members 40 each with a row of balls 3 arranged thereon, with each holding member 40 having ball holding holes 42 penetratingly formed at equal intervals in the longitudinal direction. The ball holding holes 42 are formed in a size slightly larger than the diameter of the balls 3, and rotatably contain the balls 3 therein.

Since the ball cages 4 are provided in the gaps between the raceway rail 1 and the movable block 2, any deflection in the ball cages 4 will cause them to be brought into contact with the raceway rail 1 or the movable block 2, making the movement of the movable block 2 relative to the raceway rail 1 rather heavy. In view of this, the ball cages 4 are formed of a relatively hard resin material to eliminate as much as possible the flexibility thereof.

As shown in Fig. 2, the central ridge 41 of the each ball cage 4 is arranged in the cage accommodating groove 11 of the raceway rail 1, with the pair of holding members 40 and 40 being arranged in the gap between the raceway rail 1 and the movable block 2 so as to vertically extend from the cage accommodating groove 11.

Further, on the front and back sides of each holding member 40, there are formed substantially semicircular raised holding sections 43 corresponding to the load ball paths, with the ball holding holes 42 being formed so as to segment the raised holding sections 43. As can be understood from the sectional view of portion (b) of Fig. 5, the height of the raised holding sections 43 is slightly smaller than that of the balls 3 accommodated in the ball holding holes 42; they are formed in a height not causing them to come into contact with the ball rolling grooves 12a and 12b of the raceway rail 1 and the ball rolling grooves 23a and 23b of the movable block 2 and causing the spherical surfaces of the balls 3 to be covered as widely as possible.

Further, the inner peripheral surfaces of the ball holding holes 42 are formed in a configuration in conformity with the spherical surfaces of the balls 3, and synergistically with the formation of the raised protruding portions 43 mentioned above, the ball holding holes 42 enwrap the spherical surfaces of the balls 3 over a range as wide as possible. This makes it possible to maintain a lubricant such as grease, in a satisfactory manner in the gaps between the balls 3 and the ball holding holes 42, smoothening the rotation of the balls 3 with respect to the ball cage 4; further, the lubrication between the balls 3 and the ball rolling grooves 12a, 12b, 23a, and 23b is also made satisfactory; and even if the movable block 2 is caused to repeatedly reciprocate at high speed relative to the raceway rail 1, it is possible to protect the spherical surfaces of the balls 3 and the ball rolling grooves 12a, 12b, 23a, and 23b for a long period of time.

The opening diameter of the ball holding holes 42 is slightly larger than the diameter of the balls 3 on the front side, where the central ridge is formed, and is slightly smaller than the diameter of the balls 3 on the back side opposite thereto, thus preventing the balls 3 inserted into the ball holding holes 42 from the front side of the ball cages 4 from being detached from the back side. That is, the balls 3 can be put into and out of the ball holding holes 42 on the front side, where the central ridge 41 is formed. Thus, the balls 3 accommodated in the ball holding holes 42 can be replaced easily, making it possible to easily effect adjustment of the preload of the balls 3 between the raceway rail 1 and the movable block 2.

As stated above, the ball cage 4 is formed in a configuration in which the pair of holding members 40 are connected by the central ridge 41 and which is bent at the central ridge 41, so the ball cage 4 exhibits high bending rigidity with respect to the longitudinal direction, in which the balls 3 are arranged. Thus, even if the ball cage 4 collides, at either end of the stroke range thereof, with the stopper plate 5 of the movable block 2 or the stopper plate 6 of the raceway rail 1, the ball cage 4 is not deflected, making it possible to prevent the ball cage 4 from coming into contact with the raceway rail 1 and the movable block 2.

Further, the insertion of the balls 3 into the ball holding holes 42 of the ball cage 4 is effected on the front side, where the central ridge 41 is provided, that is, on the side opposite to the bending direction of the ball cage 4, so it is possible to insert the balls 3 simultaneously into the ball holding holes 42 situated on both sides of the central ridge 41. For example, by putting the ball cage 4 into a large number of balls stored in a container, with the central ridge 41 directed upwards, and then raising the ball cage 4, it is possible to accommodate the balls 4 in all the ball holding holes 42 at one time, making it advantageously possible to easily complete the operation of arranging the balls 3 with respect to the ball cage 4.

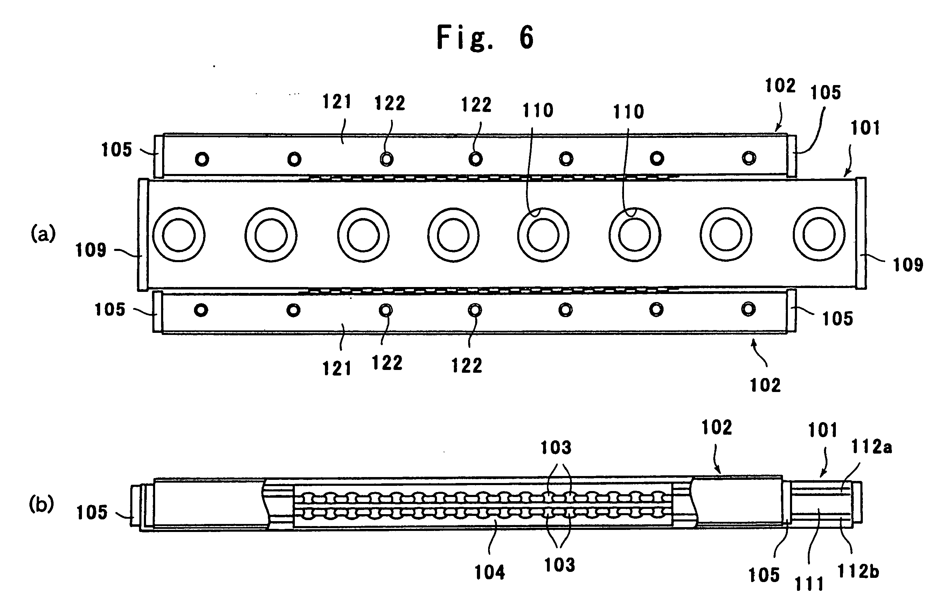

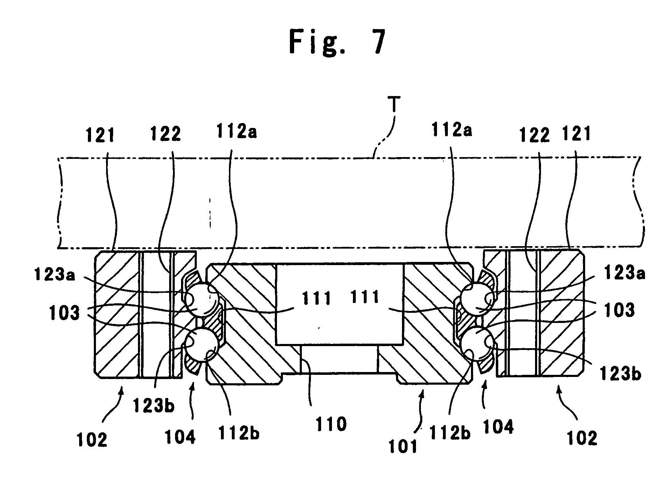

Figs. 6 and 7 show an exemplary linear guide device; portion (a) of Fig. 6 is a plan view, portion (b) thereof is a side view, and Fig. 7 is a front sectional view. This linear guide device is composed of a raceway rail 101 serving as an inner block formed in a substantially rectangular sectional configuration, a pair of movable blocks 102 serving as outer blocks formed in a substantially rectangular sectional configuration and assembled to both side surfaces of the raceway rail 101 through the intermediation of a large number of balls 103, and ball cages 104 aligning the balls 103 between the raceway rail 101 and the movable blocks 102; as shown in Fig. 7, the pair of movable blocks 102 arranged so as to sandwich the raceway rail 101 are fixed to a movable member T such as a table, whereby it is possible to cause the movable member T to freely reciprocate along the raceway rail 101.

The raceway rail 101 has bolt holes 110 extending vertically therethrough; by fastening fixation bolts (not shown) passed through the bolt holes 110 to a stationary portion of a machine, it is possible to fix the raceway rail 101 to the machine.

On both sides of the raceway rail 101, there are respectively formed cage accommodating grooves 111 extending in the axial direction of the raceway rail 101, with part of the ball cages 104 being loosely fit-engaged with the cage accommodating grooves 111. At the opening edge of each cage accommodating groove 111, there are formed two ball rolling grooves 112a and 112b situated respectively on the upper and lower sides of the cage accommodating groove 111. Of the two ball rolling grooves 112 and 112b, the ball rolling groove 112a situated on the upper side is formed downwards at an angle of 45° with respect to the width direction of the raceway rail 101 (horizontal direction in plane of drawing), and the ball rolling groove 112b situated on the lower side is formed upwards at an angle of 45° with respect to the width direction of the raceway rail 101 (horizontal direction in plane of drawing).

On the other hand, the pair of movable blocks 102 mounted to the movable member T so as to sandwich the raceway rail 101 are identical with each other, and are fixed to the movable member T with their directions interchanged. Each movable block 102 is formed in a substantially rectangular sectional configuration; a mounting surface 121 for the movable member T is formed on the top surface thereof, and tap holes 122 penetratingly formed in the movable block 102 are open in the mounting surface 121. Thus, by fastening fixation bolts (not shown) to the tap holes 122, it is possible to fix the movable block 102 to the movable member T.

In the side surfaces of the movable blocks 102 opposed to the side surfaces of the raceway rail 101, there are formed ball rolling grooves 123a and 123b opposed to the ball rolling grooves 112a and 112b of the raceway rail 101; in this way, the ball rolling grooves 112a and 112b on the raceway rail 101 side and the ball rolling grooves 123a and 123b on the movable block 102 side are opposed to each other, thereby forming load ball paths through which the balls 103 roll. That is, the balls 103 are in contact with both the ball rolling grooves 112a and 112b of the raceway rail 101 and the ball rolling grooves 123a and 123b of the movable blocks 102, and roll while bearing a load applied to the movable blocks 102. The pair of movable blocks 102 are fixed to the movable member T so as to be opposed to each other, and the raceway rail 101 is sandwiched between the movable blocks 102, so the movable member T can move lightly along the raceway rail 101 while bearing loads in all directions exerted in a plane perpendicular to the axial direction of the raceway rail 101.

Between the side surfaces of the raceway rail 101 and the side surfaces of the movable blocks 102, there are provide thin-plate-like ball cages 104, and the balls 103 rolling between the raceway rail 101 and the movable blocks 102 are arranged in the ball cages 104. Thus, when the balls 103 roll on the ball rolling surfaces 112a and 112b of the raceway rail 101 and the ball rolling surfaces 123a and 123b of the movable blocks 102, the ball cages 104 move together with the balls 103 with respect to the raceway rail 101 and the movable blocks 102. The ball cages 104 are formed to be shorter than the entire length of the movable blocks 102, that is, shorter than the ball rolling surfaces 123a and 123b. A pair of stopper plates 105 are fixed by binding screws (not shown) to both end surfaces in the longitudinal direction (axial direction) of the movable blocks 102; the ball cages 104, which move together with theballs 103, abut the stopperplates 105, whereby their movement is locked. That is, the stopper plates 105 restrict the stroke range for the ball cages 104. The movable blocks 102 move relative to the raceway rail 101 at a speed which is double the rolling speed of the balls 103 with respect to the raceway rail 101, so the movable blocks 102 can move relative to the raceway rail 101 by double the stroke of the ball cages 104 restricted by the stopper plates 105.

In a state in which the ball cages 104 are locked by the stopper plates 105 but in which no sufficient preload is imparted to the balls 103, slippage occurs between the balls 103 and the ball rolling surfaces 112a and 112b of the raceway rail 101 and the ball rolling surfaces 123a and 123b of the movable blocks 102, and there is a fear of the ball cages 104 being detached from the raceway rail 101 together with the movable blocks 102. In view of this, other stopper plates 106 are fixed to both ends of the raceway rail 101. The stopper plates 105 attached to the movable blocks 102 and the stopper plates 106 attached to the raceway rail 101 are provided so as not to interfere with each other even when the movable blocks 102 move along the raceway rail 101.

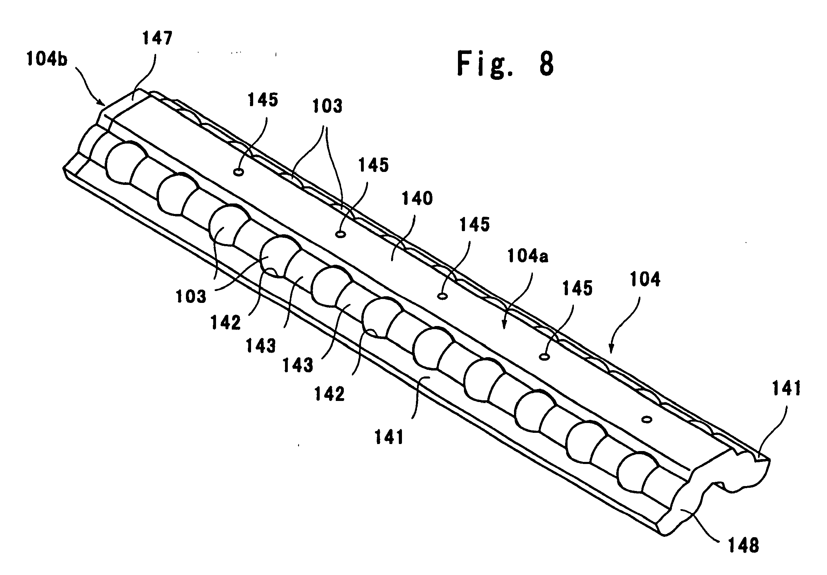

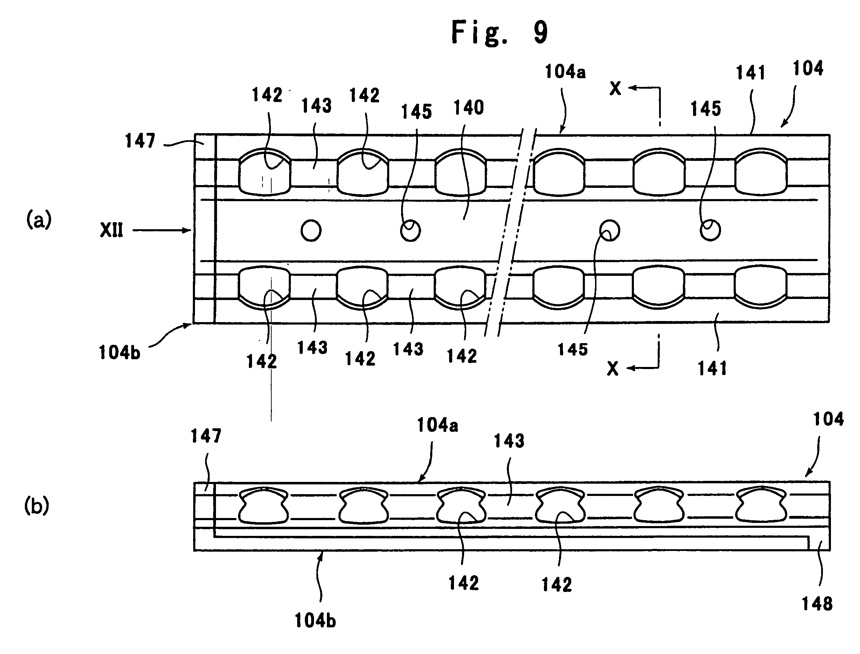

Figs. 8 and 9 show one of the ball cages 104. The ball cage 104 is formed by bonding together a first cage plate 104a and a second cage plate 104b formed by injection molding of a synthetic resin, and simultaneously retains two rows of balls 103 rolling in the two ball rolling grooves 112a and 112b formed in one side surface of the raceway rail 101. As shown in the sectional view of Fig. 5, the ball cage 104 has the central ridge 140 loosely fit-engaged with the cage accommodating groove 111 of the raceway rail 101, and is equipped with a pair of plate-like holding sections 141, each with a row of balls 103 arranged therein, situated respectively on both sides of the central ridge 140, with the holding sections 141 being connected together in a bent fashion through the intermediation of the central ridge 140. Each holding section 141 has ball holding holes 142 penetratingly formed at equal intervals in the longitudinal direction and rotatably accommodating the balls 103 therein. Fig. 8 shows the ball cage 104 with the balls 103 arranged therein, while Fig. 9 shows the first cage plate 104a and the second cage plate 104b as bonded together without accommodating the balls 103.

Since the ball cages 104 are provided in the gaps between the raceway rail 101 and the movable block 102, any deflection in the ball cages 104 will cause them to be brought into contact with the raceway rail 101 or the movable block 102, making the movement of the movable block 102 relative to the raceway rail 101 rather heavy. In view of this, the ball cages 104 are formed of a relatively hard resin material to eliminate as much as possible the flexibility thereof.

As shown in Fig. 7, the central ridge 140 of the each ball cage 104 is arranged in the cage accommodating groove 111 of the raceway rail 101, with the pair of holding members 141 and 141 being arranged in the gap between the raceway rail 101 and the movable block 102 so as to vertically extend from the cage accommodating groove 111.

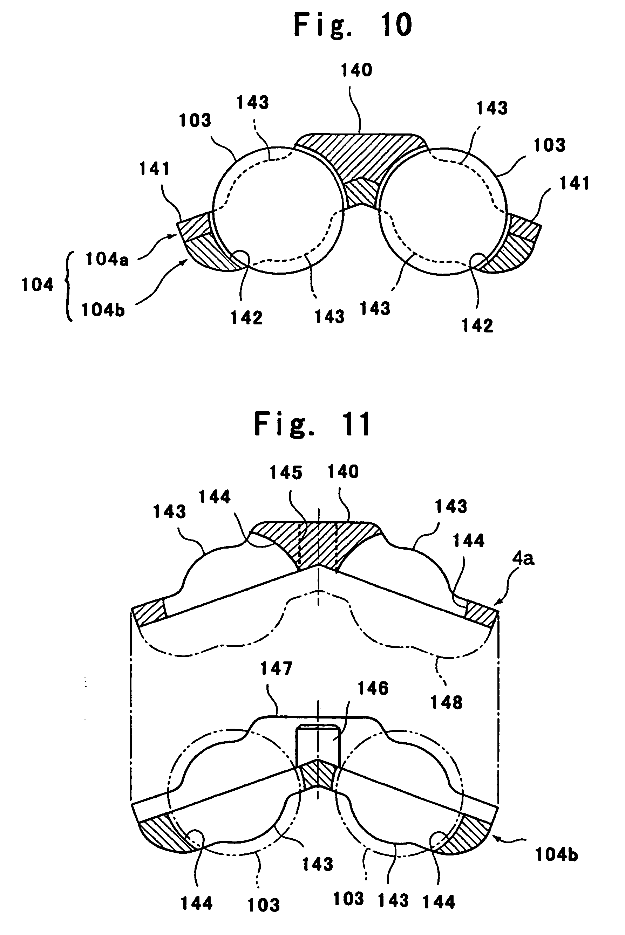

Further, on the front and back sides of each holding member 141, there are formed substantially semicircular raised holding sections 143 corresponding to the load ball paths, with the ball holding holes 142 being formed so as to segment the raised holding sections 143. As can be understood from the sectional view of Fig. 10, the height of the raised holding sections 143 is slightly smaller than that of the balls 103 accommodated in the ball holding holes 142; they are formed in a height not causing them to come into contact with the ball rolling grooves 112a and 112b of the raceway rail 101 and the ball rolling grooves 123a and 123b of the movable block 102 and causing the spherical surfaces of the balls 103 to be covered as widely as possible.

Further, the inner peripheral surfaces of the ball holding holes 142 are formed in a configuration in conformity with the spherical surfaces of the balls 103, and synergistically with the formation of the raised protruding portions 143 mentioned above, the ball holding holes 142 enwrap the spherical surfaces of the balls 103 over a range as wide as possible. This makes it possible to maintain a lubricant such as grease, in a satisfactory manner in the gaps between the balls 103 and the ball holding holes 142, smoothening the rotation of the balls 103 with respect to the ball cage 104; further, the lubrication between the balls 103 and the ball rolling grooves 112a, 112b, 123a, and 123b is also made satisfactory; and even if the movable block 102 is caused to repeatedly reciprocate at high speed relative to the raceway rail 101, it is possible to protect the spherical surfaces of the balls 103 and the ball rolling grooves 112a, 112b, 123a, and 123b for a long period of time.

The opening diameter of the ball holding holes 142 is slightly smaller than the diameter of the balls 103 on both the front side, where the central ridge is formed, and on the back side opposite thereto, thus preventing detachment of the balls 103 accommodated in the ball holding holes 142. Fig. 11 shows the step of forming the ball holding holes 142 by bonding together the first cage plate 104a and the second gage plate 104b. The first cage plate 104a and the second gage plate 104b are formed in a configuration as obtained by substantially dividing the ball cage 104 into two with respect to the thickness direction thereof, with the central ridge 140 being formed in the first cage plate 104a. Each of the first cage plate 104a and the second gage plate 104b has a plurality of divisional holes 144 allowing insertion of the balls 103 from the direction of the bonding surfaces; the openings of the divisional holes 144 on the side opposite to the direction in which the balls 103 are inserted are formed in a size smaller than the diameter of the balls 103. Thus, as shown in Fig. 10, the balls 103 are first inserted into the divisional holes 144 formed in the first cage plate 104b, and are held by the second cage plate 104b; when, in this state, the first cage plate 104a is bonded to the second cage plate 104b, the divisional holes 144 and 144 of the cage plates 104a and 104b overlap each other to form the ball holding holes 142, and the balls 103 are rotatably enclosed in the ball holding holes 142.

The bonding of the first cage plate 104a and the second cage plate 104b may be effected by using adhesive; however, since the bonding is effected with the balls 103 held in the divisional holes 144 of one of the first cage plate 104a and the second cage plate 104b, any adhesive leaked onto the inner peripheral surfaces of the divisional holes 144 at the time of bonding will be allowed to adhere to the surfaces of the balls 103. In view of this, it is desirable to bond the first cage plate 104a and the second cage plate 104b to each other by ultrasonic welding. In this case, it is necessary to provide a welding margin for ultrasonic welding in one of the first cage plate 104a and the second cage plate 104b.

In the case in which the ball cage 104 is completed by bonding together the first cage plate 104a and the second cage plate 104b, if the divisional holes 144 of the first cage plate 104a and the divisional holes 144 of the second cage plate 104b do not overlap each other accurately, there is a fear of one of the cage plates 104a and 104b coming into contact with the spherical surfaces of the balls 103 to hinder smooth rotation of the balls 103. In view of this, reference holes 145 are penetratingly formed in the central ridge 140 of the first cage plate 104a at predetermined intervals in the longitudinal direction, and positioning pins 146 to be fit-engaged with the reference holes 145 of the first cage plate 104a are provided upright at the center in the width direction of the second cage plate 104b, the first cage plate 104a and the second cage plate 104b being bonded together with the reference holes 145 and the positioning pins 146 fit-engaged with each other. As a result, it is possible to form the ball holding holes 142 accurately and to secure smooth rotation of the balls 103.

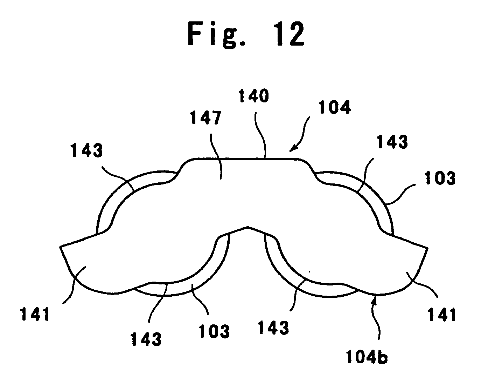

At its stroke end, the ball cage 104 repeatedly abuts the stopper plate 105 of the movable block 102 or the stopper plate 109 of the raceway rail 1; thus, when the bonding surfaces of the first cage plate 104a and the second cage plate 104b are exposed at the end in the moving direction of the ball cage 140 (horizontal direction in plane of Fig. 4), even if the first cage plate 104a and the second cage plate 104b are firmly welded together, due to the impact when the ball cage abuts the stopper plate 105 and 109, a gap is gradually generated between the bonding surfaces of the first cage plate 104a and the second cage plate 104b, and there is a fear of the ball cage 104 ending up being disintegrated into the first cage plate 104a and the second cage plate 104b. In view of this, as shown in portion (b) of Fig. 9, at one end of the bonding surface of the second cage plate 104b, there is provided upright a cover plate 147 corresponding to the thickness and configuration of the first cage plate 104a ; similarly, at one end of the bonding surface of the first cage plate 104a, there is provided upright a cover plate 148 corresponding to the thickness and configuration of the second cage plate 104b; when the first cage plate 104a and the second cage plate 104b are bonded together, each cover plate 147 and 148 covers the end portion of the associated cage plate 104a and 104b. Thus, as shown in Fig. 12, the end portion of the ball cage 104 in the moving direction thereof is covered with the cover plate 147 and 148 formed on one of the cage plates 104a and 104b, thus preventing the bonding surfaces of the first cage plate 104a and the second cage plate 104b from being exposed at the end in the moving direction of the ball cage 104. This helps to achieve an improvement in terms of the durability of the ball cage 104 formed by bonding together the two cage plates 104a and 104b.

## Claims

1. A linear guide device, comprising:
an inner block (1) formed in a substantially rectangular sectional configuration and having on each of both sides of the inner block (1) a cage accommodating groove (11) extending in an axial direction of the inner block (1), and having on the upper and lower side of the cage accommodating groove (11) one set of two lines of upper and lower vertically adjacent ball rolling grooves (12a, 12b);
an outer block (2) formed in a channel-like configuration to have an accommodating groove to be loosely fit-engaged with the inner block (1) and having, on inner side surfaces of the outer block (2) facing the accommodating groove (11), rolling grooves (23a, 23b) opposed to the ball rolling grooves (12a, 12b) of the inner block (1);
a large number of balls (3) rolling in load ball paths formed by the ball rolling grooves (12a, 12b, 23a, 23b) of the inner block (1) and the outer block (2) while bearing a load; and
a pair of ball cages (4) arranged in gaps between outer side surfaces of the inner block (1) and inner side surfaces of the outer block (2) and aligning the large number of balls (3) rolling in the pairs of ball rolling grooves (12a, 12b, 23a, 23b) at predetermined intervals;
the ball cages (4) are formed as thin plates of a synthetic resin being free from flexibility and formed in a substantially L-shaped sectional configuration by connecting by a central ridge (41) a pair of holding members (40) each with a row of balls (3) arranged, and having on each of the front and back sides of each holding member (40) a line of substantially semicircular raised holding sections (43) in correspondence with the load ball paths, with holding holes (42) for rotatably accommodating the individual balls (3); and
the pair of holding members (40) extend obliquely upward and obliquely downward from the central ridge (41) and a front edge of each holding member (40) is arranged adjacent the inner side surfaces of the outer block (2);
**characterized in that**
the holding holes (42) are penetratingly formed at predetermined intervals so that the holding holes (42) segment the raised holding sections (43);
the central ridge (41) of the ball cage (4) is arranged in the cage accommodating groove (11) of the inner block (1);
one opening of each of the holding holes (42) is formed in a size smaller than the diameter of the balls (3), and the other opening thereof is formed in a size larger than the diameter of the balls (3), with the balls accommodated in the holding holes (42) being replaceable; and
stopper plates (6) for locking the central ridge (41) moving within the cage accommodating groove (11) are fixed to both ends with respect to an axial direction of the inner block (1).

2. A linear guide device, comprising:
an inner block (1) formed in a substantially rectangular sectional configuration and having on each of both sides of the inner block (1) a cage accommodating groove (11) extending in an axial direction of the inner block (1), and having on the upper and lower side of the cage accommodating groove (11) one set of two lines of upper and lower vertically adjacent ball rolling grooves (12a, 12b);
an outer block (2) formed in a channel-like configuration to have an accommodating groove to be loosely fit-engaged with the inner block (1) and having, on inner side surfaces of the outer block (2) facing the accommodating groove (11), rolling grooves (23a, 23b) opposed to the ball rolling grooves (12a, 12b) of the inner block (1);
a large number of balls (3) rolling in load ball paths formed by the ball rolling grooves (12a, 12b, 23a, 23b) of the inner block (1) and the outer block (2) while bearing a load; and
a pair of ball cages (4) arranged in gaps between outer side surfaces of the inner block (1) and inner side surfaces of the outer block (2) and aligning the large number of balls (3) rolling in the pairs of ball rolling grooves (12a, 12b, 23a, 23b) at predetermined intervals;
the ball cages (4) are formed as thin plates of a synthetic resin being free from flexibility and formed in a substantially L-shaped sectional configuration by connecting by a central ridge (41) a pair of holding members (40) each with a row of balls (3) arranged, and having on each of the front and back sides of each holding member (40) a line of substantially semicircular raised holding sections (43) in correspondence with the load ball paths, with holding holes (42) for rotatably accommodating the individual balls (3); and
the pair of holding members (40) extend obliquely upward and obliquely downward from the central ridge (41) and a front edge of each holding member (40) is arranged adjacent the inner side surfaces of the outer block (2);
**characterized in that**
the holding holes (42) are penetratingly formed at predetermined intervals so that the holding holes (42) segment the raised holding sections (43);
the central ridge (41) of the ball cage (4) is arranged in the cage accommodating groove (11) of the inner block (1);
one opening of each of the holding holes (42) is formed in a size smaller than the diameter of the balls (3), and the other opening thereof is formed in a size larger than the diameter of the balls (3), with the balls accommodated in the holding holes (42) being replaceable; and
stopper plates (5) for locking the front edge of each holding member (40) are fixed to front and rear ends with respect to an axial direction of the outer block (2).

3. A linear guide device according to claims 1 or 2, **characterized in that** inner peripheral surfaces of the holding holes (42) are formed in a configuration in conformity with spherical surfaces of the balls (3).

4. A linear guide device according to one of the preceding claims, **characterized in that**:
each of the ball cages (4) is bent between two rows of ball holding holes (42) adjacent to each other; and the balls (3) are insertable into the holding holes (42) from the side opposite to a direction in which the ball cage (4) is bent.

## Patentansprüche

1. Linearführungsvorrichtung, umfassend:
einen Innenblock (1), der in einer im Wesentlichen rechteckigen Schnittausgestaltung ausgebildet ist und an jeder von beiden Seiten des Innenblocks (1) eine Käfigunterbringungsnut (11) mit Erstreckung in einer Axialrichtung des Innenblocks (1) aufweist und an der oberen und unteren Seite der Käfigunterbringungsnut (11) einen Satz von zwei Linien von oberen und unteren vertikal benachbarten Kugelwälznuten (12a, 12b) aufweist;
einen Außenblock (2), der in einer kanalartigen Ausgestaltung derart ausgebildet ist, dass er eine Unterbringungsnut in losem Passeingriff mit dem Innenblock (1) aufweist, und an Innenseitenoberflächen des Außenblocks (2) mit Orientierung zu der Unterbringungsnut (11) Wälznuten (23a, 23b) entgegengesetzt bzw. gegenüberliegend zu den Kugelwälznuten (12a, 12b) des Innenblocks (1) aufweist;
eine große Anzahl von Kugeln (3), die sich in Lastkugelbahnen, die durch die Kugelwälznuten (12a, 12b, 23a, 23b) des Innenblocks (1) und des Außenblocks (2) gebildet werden, während des Tragens einer Last abwälzen; und
ein Paar von Kugelkäfigen (4), die in Spalten zwischen Außenseitenoberflächen des Innenblocks (1) und Innenseitenoberflächen des Außenblocks (2) angeordnet sind und die große Anzahl von Kugeln (3), die sich in den Paaren von Kugelwälznuten (12a, 12b, 23a, 23b) abwälzen, in vorbestimmten Intervallen ausrichten;
wobei die Kugelkäfige (4) als dünne Platten aus einem synthetischen Harz flexibilitätsfrei ausgebildet sind und in einer im Wesentlichen L-förmigen Schnittausgestaltung durch mittels eines Zentralsteges (41) erfolgendes Verbinden eines Paares von Halteelementen (40) jeweils mit einer Reihe von angeordneten Kugeln (3) ausgebildet sind und an jeder der Vorder- und Rückseiten eines jeden Halteelementes (40) eine Linie von im Wesentlichen halbkreisförmigen erhöhten Halteabschnitten (43) in Entsprechung zu den Lastkugelbahnen mit Haltelöchern (42) zum drehbaren Unterbringen der einzelnen Kugeln (3) aufweisen; und
wobei sich das Paar von Halteelementen (40) schräg nach oben und schräg nach unten von dem Zentralsteg (41) aus erstreckt und eine Vorderkante eines jeden Halteelementes (40) benachbart zu den Innenseitenoberflächen des Außenblocks (2) angeordnet ist;
**dadurch gekennzeichnet, dass**
die Haltelöcher (42) durchdringend in vorbestimmten Intervallen derart ausgebildet sind, dass die Haltelöcher (42) die erhöhten Halteabschnitte (43) segmentieren;
der Zentralsteg (41) des Kugelkäfigs (4) in der Käfigunterbringungsnut (11) des Innenblocks (1) angeordnet ist;
eine Öffnung eines jeden der Haltelöcher (42) in einer Größe ausgebildet ist, die kleiner als der Durchmesser der Kugeln (3) ist, während die andere Öffnung hiervon in einer Größe ausgebildet ist, die größer als der Durchmesser der Kugeln (3) ist, wobei die Kugeln in den Haltelöchern (42) austauschbar bzw. ersetzbar untergebracht sind; und
Stopperplatten (6), die zum Arretieren einer Bewegung des Zentralsteges (41) innerhalb der Käfigunterbringungsnut (11) an beiden Enden in Bezug auf eine Axialrichtung des Innenblocks (1) befestigt sind.

2. Linearführungsvorrichtung, umfassend:
einen Innenblock (1), der in einer im Wesentlichen rechteckigen Schnittausgestaltung ausgebildet ist und an jeder von beiden Seiten des Innenblocks (1) eine Käfigunterbringungsnut (11) mit Erstreckung in einer Axialrichtung des Innenblocks (1) aufweist und an der oberen und unteren Seite der Käfigunterbringungsnut (11) einen Satz von zwei Linien von oberen und unteren vertikal benachbarten Kugelwälznuten (12a, 12b) aufweist;
einen Außenblock (2), der in einer kanalartigen Ausgestaltung derart ausgebildet ist, dass er eine Unterbringungsnut in losem Passeingriff mit dem Innenblock (1) aufweist, und an Innenseitenoberflächen des Außenblocks (2) mit Orientierung zu der Unterbringungsnut (11) Wälznuten (23a, 23b) entgegengesetzt bzw. gegenüberliegend zu den Kugelwälznuten (12a, 12b) des Innenblocks (1) aufweist;
eine große Anzahl von Kugeln (3), die sich in Lastkugelbahnen, die durch die Kugelwälznuten (12a, 12b, 23a, 23b) des Innenblocks (1) und des Außenblocks (2) gebildet werden, während des Tragens einer Last abwälzen; und
ein Paar von Kugelkäfigen (4), die in Spalten zwischen Außenseitenoberflächen des Innenblocks (1) und Innenseitenoberflächen des Außenblocks (2) angeordnet sind und die große Anzahl von Kugeln (3), die sich in den Paaren von Kugelwälznuten (12a, 12b, 23a, 23b) abwälzen, in vorbestimmten Intervallen ausrichten;
wobei die Kugelkäfige (4) als dünne Platten aus einem synthetischen Harz flexibilitätsfrei ausgebildet sind und in einer im Wesentlichen L-förmigen Schnittausgestaltung durch mittels eines Zentralsteges (41) erfolgendes Verbinden eines Paares von Halteelementen (40) jeweils mit einer Reihe von angeordneten Kugeln (3) ausgebildet sind und an jeder der Vorder- und Rückseiten eines jeden Halteelementes (40) eine Linie von im Wesentlichen halbkreisförmigen erhöhten Halteabschnitten (43) in Entsprechung zu den Lastkugelbahnen mit Haltelöchern (42) zum drehbaren Unterbringen der einzelnen Kugeln (3) aufweisen; und
wobei sich das Paar von Halteelementen (40) schräg nach oben und schräg nach unten von dem Zentralsteg (41) aus erstreckt und eine Vorderkante eines jeden Halteelementes (40) benachbart zu den Innenseitenoberflächen des Außenblocks (2) angeordnet ist;
**dadurch gekennzeichnet, dass**
die Haltelöcher (42) durchdringend in vorbestimmten Intervallen derart ausgebildet sind, dass die Haltelöcher (42) die erhöhten Halteabschnitte (43) segmentieren;
der Zentralsteg (41) des Kugelkäfigs (4) in der Käfigunterbringungsnut (11) des Innenblocks (1) angeordnet ist;
eine Öffnung eines jeden der Haltelöcher (42) in einer Größe ausgebildet ist, die kleiner als der Durchmesser der Kugeln (3) ist, während die andere Öffnung hiervon in einer Größe ausgebildet ist, die größer als der Durchmesser der Kugeln (3) ist, wobei die Kugeln in den Haltelöchern (42) austauschbar bzw. ersetzbar untergebracht sind; und
Stopperplatten (5), die zum Arretieren der Vorderkante eines jeden Halteelementes (40) an Vorder- und Hinterenden in Bezug auf eine Axialrichtung des Außenblocks (1) befestigt sind.

3. Linearführungsvorrichtung nach Ansprüchen 1 oder 2, **dadurch gekennzeichnet, dass** Innenumfangsoberflächen der Haltelöcher (42) mit einer Ausgestaltung in Übereinstimmung mit sphärischen Oberflächen der Kugeln (3) ausgebildet sind.

4. Linearführungsvorrichtung nach einem der vorherigen Ansprüche, **dadurch gekennzeichnet, dass** jeder der Kugelkäfige (4) zwischen zwei Reihen von Kugelnhaltelöchern (42) benachbart zueinander gebogen ist; und die Kugeln (3) in die Haltelöcher (42) von der Seite entgegengesetzt zu einer Richtung, in der der Kugelkäfig (4) gebogen ist, einführbar ist.

## Revendications

1. Dispositif de guidage linéaire comprenant :
un bloc intérieur (1) qui a une forme en section globalement rectangulaire et qui présente sur chacun des deux côtés du bloc intérieur (1) une rainure de logement de cage (11) s'étendant dans un sens axial du bloc intérieur (1), et qui présente sur les côtés supérieur et inférieur de la rainure de logement de cage (11) une série de deux lignes de rainures supérieure et inférieure de roulement de billes (12a, 12b) voisines verticalement ;
un bloc extérieur (2) qui a la forme en manière d'un canal de manière à présenter une rainure de logement à emboîter avec du jeu avec le bloc intérieur (1), et qui présente sur les surfaces latérales intérieures du bloc extérieur (2) situées en face de la rainure de logement (11) des rainures de roulement (23a, 23b) opposées aux rainures de roulement de billes (12a, 12b) du bloc intérieur (1) ;
un grand nombre de billes (3) qui roulent dans des chemins de billes de charge formés par les rainures de roulement de billes (12a, 12b, 23a, 23b) du bloc intérieur (1) et du bloc extérieur (2), tout en portant une charge ; et
une paire des cages à billes (4) qui sont disposées dans des espaces entre les surfaces latérales extérieures du bloc intérieur (1) et les surfaces latérales intérieures du bloc extérieur (2) et qui alignent le grand nombre de billes (3) qui roulent dans les paires de rainures de roulement de billes (12a, 12b, 23a, 23b) suivant des intervalles prédéterminés ;
les cages à billes (4) ont la forme de minces plaques de résine synthétique sans flexibilité et globalement en L, en section, en reliant à l'aide d'une arête centrale (41) deux éléments de fixation (40) qui présentent chacun une rangée de billes (3), avec sur chacun des côtés avant et arrière de chaque élément de fixation (40) une ligne de sections de fixation saillantes (43) globalement semi-circulaires correspondant aux chemins de billes de charge, qui sont pourvues de trous de fixation (42) pour recevoir en rotation les billes individuelles (3) ; et
les deux éléments de fixation (40) s'étendent en biais vers le haut et en biais vers le bas à partir de l'arête centrale (41), et un bord avant de chaque élément de fixation (40) est disposé près des surfaces latérales intérieures du bloc extérieur (2) ;
**caractérisé en ce que**
les trous de fixation (42) sont formés, traversants, à des intervalles prédéterminés, de sorte qu'ils segmentent les sections de fixation saillantes (43) ;
l'arête centrale (41) de la cage à billes (4) est disposée dans la rainure de logement de cage (11) du bloc intérieur (1) ;
une ouverture de chacun des trous de fixation (42) est formée avec une taille plus petite que le diamètre des billes (3), tandis que l'autre ouverture est formée avec une taille plus grande que le diamètre des billes (3), les billes logées dans les trous de fixation (42) étant remplaçables ; et
des plaques d'arrêt (6) pour bloquer l'arête centrale (41) qui se déplace à l'intérieur de la rainure de logement de cage (11) sont fixées aux deux extrémités par rapport à un sens axial du bloc intérieur (1).

2. Dispositif de guidage linéaire comprenant :
un bloc intérieur (1) qui a une forme en section globalement rectangulaire et qui présente sur chacun des deux côtés du bloc intérieur (1) une rainure de logement de cage (11) s'étendant dans un sens axial du bloc intérieur (1), et qui présente sur les côtés supérieur et inférieur de la rainure de logement de cage (11) une série de deux lignes de rainures supérieure eet inférieure de roulement de billes (12a, 12b) voisines verticalement ;
un bloc extérieur (2) qui a la forme en manière d'un canal de manière à présenter une rainure de logement à emboîter avec du jeu avec le bloc intérieur (1) et qui présente sur les surfaces latérales intérieures du bloc extérieur (2) situées en face de la rainure de logement (11) des rainures de roulement (23a, 23b) opposées aux rainures de roulement de billes (12a, 12b) du bloc intérieur (1) ;
un grand nombre de billes (3) qui roulent dans des chemins de billes de charge formés par les rainures de roulement de billes (12a, 12b, 23a, 23b) du bloc intérieur (1) et du bloc extérieur (2) tout en portant une charge ; et
une paire des cages à billes (4) qui sont disposées dans des espaces entre les surfaces latérales extérieures du bloc intérieur (1) et les surfaces latérales intérieures du bloc extérieur (2) et qui alignent le grand nombre de billes (3) qui roulent dans les paires de rainures de roulement de billes (12a, 12b, 23a, 23b) suivant des intervalles prédéterminés ;
les cages à billes (4) ont la forme de minces plaques de résine synthétique sans flexibilité et globalement en L, en section, en reliant chacune, à l'aide d'une arête centrale (41) deux éléments de fixation (40), à une rangée de billes (3), avec sur chacun des côtés avant et arrière de chaque élément de fixation (40) une ligne de sections de fixation saillantes (43) globalement semi-circulaires correspondant aux chemins de billes de charge, qui sont pourvues de trous de fixation (42) pour recevoir en rotation les billes individuelles (3) ; et
les deux éléments de fixation (40) s'étendent en biais vers le haut et en biais vers le bas à partir de l'arête centrale (41), et un bord avant de chaque élément de fixation (40) est disposé près des surfaces latérales intérieures du bloc extérieur (2) ;
**caractérisé en ce que**
les trous de fixation (42) sont formés, traversants, à des intervalles prédéterminés, de sorte qu'ils segmentent les sections de fixation saillantes (43) ;
l'arête centrale (41) de la cage à billes (4) est disposée dans la rainure de logement de cage (11) du bloc intérieur (1) ;
une ouverture de chacun des trous de fixation (42) est formée avec une taille plus petite que le diamètre des billes (3), tandis que l'autre ouverture est formée avec une taille plus grande que le diamètre des billes (3), les billes logées dans les trous de fixation (42) étant remplaçables ; et
des plaques d'arrêt (5) pour bloquer le bord avant de chaque élément de fixation (40) sont fixées aux extrémités avant et arrière par rapport à un sens axial du bloc intérieur (2).

3. Dispositif de guidage linéaire selon les revendications 1 ou 2, **caractérisé en ce que** les surfaces périphériques intérieures des trous de fixation (42) sont formées suivant une configuration correspondant aux surfaces sphériques des billes (3).

4. Dispositif de guidage linéaire selon l'une des revendications précédentes, **caractérisé en ce que** :
chacune des cages à billes (4) est courbe entre deux rangées de trous de fixation de billes (42) l'une près de l'autre ; et les billes (3) sont aptes à être introduites dans les trous de fixation (42) à partir du côté opposé à un sens dans lequel la cage à billes (4) est courbe.
